# EUROPÄISCHE PATENTANMELDUNG

(11) **EP 1 785 320 A1**
(43) Veröffentlichungstag der Anmeldung: **16.05.2007**
(21) Anmeldenummer: 06120860.9
(22) Anmeldetag: 19.09.2006
(51) Int. Cl.: B60R 21/34, B60R 21/13

(54) **Aufstellbare Schutzvorrichtung in Kraftfahrzeugen zum Personenschutz mit einem Federantrieb**

(30) Priorität: 12.11.2005 DE 102005054039
(71) Anmelder: ISE Innomotive Systems Europe GmbH, 51702 Bergneustadt (DE)
(72) Erfinder: Janisch, Mirko, 53797 Lohmar (DE); Schulte, Michael, 57462 Olpe/Biggesee (DE); Röhner, Stephan, 44287 Dortmund (DE)
(74) Vertreter: Fuchs Mehler Weiss & Fritzsche

(57) **Zusammenfassung**

Derartige Schutzvorrichtungen weisen typischerweise ein in einem karosseriefesten Gehäuse (2) geführtes aufstellbares Element (3, 21) auf, das im Grundzustand durch eine auslösbare Haltevorrichtung (11, 12) in seiner Lage fixiert ist und sensorgesteuert mittels eines Federantriebes (10, 19) mit hoher Beschleunigung um einen vorgegebenen Hub unter Aktivierung des Schutzes ausfahrbar ist.

Um ein Reversieren des aufgestellten Elementes (3, 21) zu erleichtern, sieht die Erfindung eine vorzugsweise manuell aktivierbare mechanische Einrichtung (15) zum Ausschalten des Federantriebes (10, 19) vor einer Reversierung des ausgefahrenen aufstellbaren Elementes (3) vor.

## Beschreibung

Die Erfindung bezieht sich auf eine Schutzvorrichtung in Kraftfahrzeugen zum Personenschutz, welche ein in einem karosseriefesten Gehäuse geführtes aufstellbares Element aufweist, das im Grundzustand durch eine auslösbare Haltevorrichtung in seiner Lage fixiert ist und im Gefahrenfall sensorgesteuert mittels eines vorgespannten Federantriebes mit hoher Beschleunigung um einen vorgegebenen Hub unter Aktivierung des Schutzes ausfahrbar ist.

In Kraftfahrzeugen werden verstärkt Schutzvorrichtungen zum Personenschutz integriert, die zwei zueinander bewegbare Teile aufweisen, welche im Grundzustand, wenn keine Gefährdung zu erwarten ist, durch eine Haltevorrichtung in ihrer gegenseitigen Lage gegen die Kraft einer Antriebsfeder fixiert werden müssen, und die im Gefahrenfall unter Auslösen der Haltevorrichtung mit hoher Beschleunigung relativ zueinander bewegt werden müssen.
Typische Beispiele sind die bekannten Überrollschutzvorrichtungen für Cabriolets zum Schutz der Fahrzeuginsassen mit einem ausfahrbaren Überrollbügel, der im Grundzustand durch die Haltevorrichtung in einer abgesenkten Ruhelage gegen die Kraft einer vorgespannten Antriebsfeder in einem Gehäuse fixiert ist, und der im Überschlagfall sensorgesteuert mittels des dann aktivierten Federantriebes aus der abgesenkten Ruhelage in eine Stützlage ausfährt. Stellvertretend für viele Druckschriften wird hierzu auf die DE 100 40 642 C2 verwiesen.

Ein weiteres typisches Beispiel sind die bekannten Vorrichtungen zum Schutz von Personen bei einem Frontalaufprall auf die Fronthaube des Kraftfahrzeuges durch aktives Aufstellen der Fronthaube, insbesondere im Bereich des Haubenscharnieres, durch ein Aufstellelement, auch Aktor genannt, das aus einem karosseriefesten Gehäuse und einem darin mittels eines Federantriebes aufstellbar gehalterten, mit der Fronthaube verbundenen Hubelement besteht. Im Grundzustand wird das Hubelement durch die Haltevorrichtung gegen die Kraft der vorgespannten Antriebsfeder in der abgesenkten Ruhelage gehalten; im Gefahrenfall wird es sensorgesteuert unter Auslösen der Haltevorrichtung durch den Federantrieb um einen vorgegebenen Hub aufgestellt.

Letztere Vorrichtungen für einen Aufprallschutz nach dem Prinzip der aktiven Fronthaube, für welche die Erfindung im besonderen Maße in Betracht kommt, sollen Fußgänger, seien es Kinder oder Erwachsene, bzw. Zweiradfahrer oder Skater, die von einem Kraftfahrzeug angefahren, und auf dessen Front- oder Motorhaube sowie gegen die Windschutzscheibe geschleudert werden, gegen besonders schwere Verletzungen schützen. Dabei ist insbesondere der Kopf sowie der Oberkörper eines erwachsenen Fußgängers bzw. Zweirad-Fahrers gefährdet, da dieser bei einem Zusammenprall mit einem Kraftfahrzeug - wie Crash-Versuche und auch die Erfahrungen gezeigt haben -, etwa im hinteren, relativ harten Bereich an der Fronthaube am Übergang zur Windschutzscheibe aufschlägt und dabei erheblich verletzt wird. Vorgenannte Schutzvorrichtungen, wie sie z.B. stellvertretend für viele Schriften durch die DE 197 12 961 A1 bekannt geworden sind, entschärfen den vorgenannten harten Übergangsbereich zur Windschutzscheibe, indem sie ihn nachgiebiger gestalten.
Dadurch, dass nämlich die Fronthaube bei der von einem Aufprall-Sensor erfassten Kollision mit einem Fußgänger in eine gegenüber ihrer Ruhe - d.h. Normalfallstellung angehobene Aufprallstellung federnd nachgebend verstellt wird, wird ein beim Brust- oder Kopfaufprall des Fußgängers im Sinne eines günstigeren Energieabbaues zur Wirkung kommender elastischer Deformationsweg der Fahrzeugkarosserie geschaffen, der für verringerte Kopf- und Brustverzögerungen und damit für geringere Verletzungsrisiken sorgt.

Wird bei derartigen Schutzvorrichtungen die Haltevorrichtung durch die Sensorik ausgelöst, ohne dass es zu einem Unfall kommt, z.B. durch eine Mülltonne oder ein anderes lebloses, insbesondere "weiches" Hindernis, dann ist es bekannt, das aufgestellte Schutzelement, d.h. entsprechend den beiden vorbeschriebenen Beispielen den Überrollbügel oder die Fronthaube, direkt vor Ort, manuell durch einen Fahrzeuginsassen in den gespannten Grundzustand zu reversieren, damit z.B. die Fronthaube bei der Weiterfahrt nicht die Sicht beeinträchtigt bzw. der aufgestellte Überrollbügel keinen Anlaß für eine Kopfverletzung bei einem Heckaufprall bietet.

Dieses Reversieren muß gegen die relativ hohe Federkraft der Antriebsfedern erfolgen, wozu typischerweise die direkte Handkraft nicht ausreicht. Es sind daher zahlreiche Vorschläge aus der Patentliteratur bekannt geworden, um das Reversieren mittels eines kraftverstärkenden Hilfsmittels, z.B. eines Werkzeuges gemäß der DE 103 11 533 B2 oder mittels einer äußeren Hilfskraft gemäß der DE 10 2004 015 579 A1 oder einer Komponente des Fahrzeuges, z.B. der Fronthaube oder einer Fahrzeugtür, durchführen zu können. Dieses Reversieren erfordert jedoch immer noch koordinierte Abläufe, die in der Betriebsanleitung nachgelesen werden müssen und die nicht von jeder Person ohne weiteres durchgeführt werden können.

Der Erfindung liegt die Aufgabe zugrunde, die eingangs bezeichnete Schutzvorrichtung so auszubilden, dass auf sehr einfache und kräftearme Art und Weise das von dem Federantrieb aufgestellte Element manuell in die Grundposition absenkbar ist.

Die Lösung dieser Aufgabe gelingt bei einer Schutzvorrichtung in Kraftfahrzeugen zum Personenschutz, welche ein in einem karosseriefesten Gehäuse geführtes aufstellbares Element aufweist, das im Grundzustand durch eine auslösbare Haltevorrichtung in seiner Lage fixiert ist und im Gefahrenfall sensorgesteuert mittels eines vorgespannten Federantriebes mit hoher Beschleunigung um einen vorgegebenen Hub unter Aktivierung des Schutzes ausfahrbar ist, gemäß der Erfindung dadurch, dass eine Einrichtung zum Ausschalten des Federantriebes zur selbsttätigen Absenkung des ausgefahrenen aufstellbaren Elementes ohne Spannen des Federantriebes vorgesehen ist.

Durch eine manuelle Betätigung der Einrichtung kann somit auf einfache und kräftearme Weise der Federantrieb ausgeschaltet werden, so dass das System nicht mehr gegen die Federkraft abgesenkt werden muß bzw. das System aufgrund des Eigengewichtes der aufgestellten Schutzkomponente, wie Fronthaube oder Überrollbügel, selbsttätig in die Ausgangsposition, allerdings ohne Spannen des Federantriebes, versetzt wird. Das Spannen des Federantriebes, d. h. das Scharfstellen des Systems, kann dann später in der Werkstatt erfolgen.

Durch die erfindungsgemäßen Maßnahmen ist eine zweistufige Reversierung des ausgefahrenen Elementes der Schutzvorrichtung möglich, mit einer nahezu kraftlosen Absenkung des ausgefahrenen Elements vor Ort, d. h. am Ort der Auslösung, im ersten Schritt, und einem Spannen des Federantriebes in der Werkstatt im zweiten Schritt.

Weiterbildungen und Ausgestaltungen der Erfindung sind in den Unteransprüchen gekennzeichnet sowie ergeben sich aus der nachfolgenden Figurenbeschreibung.

Anhand von zwei in den Zeichnungen auf der Basis eines Aufstellelementes für die Fronthaube eines Kraftfahrzeuges im Scharnierbereich in verschiedenen Ansichten und Betriebszuständen dargestellten Ausführungsbeispielen wird die Erfindung näher erläutert.

Es zeigen:
- Fig. 1: in einer isometrischen Gesamtdarstellung ein Aufstellelement mit Federantrieb für eine aktive Fronthaube mit montiertem Haubenscharnier im abgelegten Grundzustand des Hubelementes, mit einer ersten Variante eines Federausschalt-Mechanismus in Form einer Tasten-Klinken-Kette,
- Fig. 2: eine Längsschnitt-Darstellung durch das Aufstellelement nach Fig. 1 ohne Haubenscharnier, unter näherer Darstellung des Federantriebes und des Hubelementes in Form eines Scherensystems,
- Fig. 3: in einer isometrischen Darstellung das Aufstellelement nach Fig. 1 im aufgestellten Zustand des Hubelementes,
- Fig. 4: eine Längsschnitt-Darstellung durch das Aufstellelement analog Fig. 2, jedoch im aufgestellten Zustand nach Fig. 3,
- Fig. 5: eine Längsschnitt-Darstellung das Aufstellelement auf der Basis nach Fig. 4, jedoch mit ausgelöstem FederausschaltMechanismus und unmittelbar vor der Reversierung des Hubelementes,
- Fig. 6: in einer Längsschnitt-Darstellung das Aufstellelement analog Fig. 4, jedoch im reversierten Zustand des Hubelementes,
- Fig. 7: in einer Längsschnitt-Darstellung entsprechend Fig. 4 eine zweite Variante eines Federausschalt-Mechanismus in Form eines Gewindesperrbolzens, und
- Fig. 8: in zwei Figurenteilen A, B in einer schematisierten Längsschnitt-Darstellung einen Federausschalt-Mechanismus in Form einer feststellbaren bzw. lösbaren Drehklappe bei einem Federantrieb mit einer linear aufstellenden Druckfeder, mit festgestellter Drehklappe (Grundzustand) im Figurenteil B und aktiviertem Federausschalt-Mechanismus im Figurenteil A.

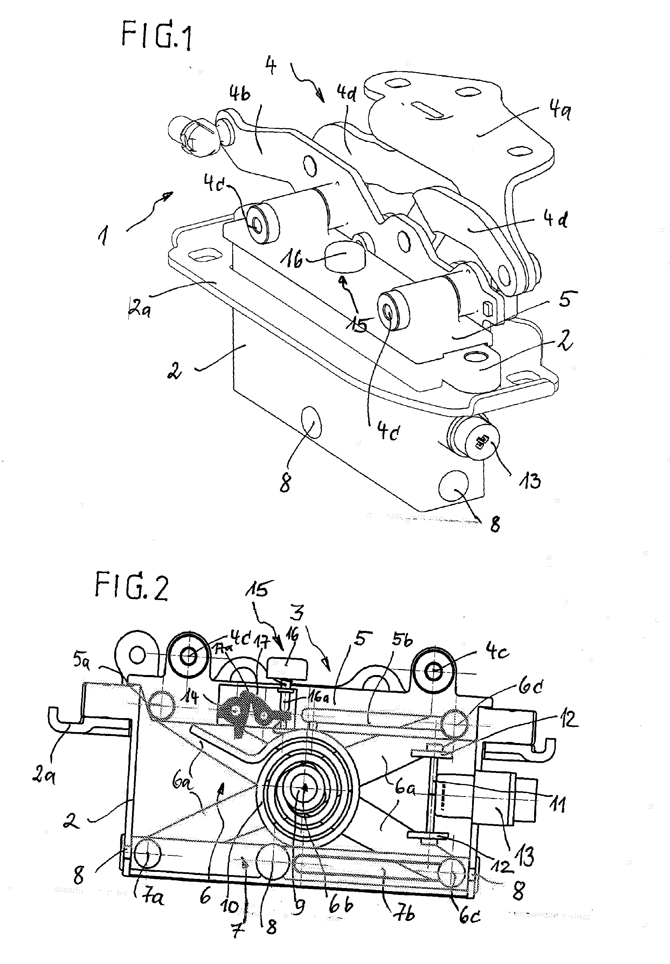

Die Fig. 1 zeigt ein Aufstellelement 1 zum aktiven Aufstellen der Fronthaube eines Personenkraftwagens im Haubenscharnierbereich, welches an beiden Seiten des Vorderwagens im Motorraum angebracht ist. Ein derartiges Aufstellelement, das in Fig. 1 in der Grundposition dargestellt ist, wird auch als Aktor bezeichnet.

Das Aufstellelement 1 weist typischerweise ein Gehäuse 2 auf, welchem ein rahmenartiger Flansch 2 a zugeordnet ist und welches karosseriefest angebracht ist, und in welchem ein Hubelement 3, das mit einem Haubenscharnier 4 verbunden ist, federvorgespannt aufstellbar gehaltert ist, von dem in Fig. 1 nur ein Kopfteil 5 zu erkennen ist. Der nähere Aufbau des Hubelementes ist in den Fig. 2 ff. näher dargestellt. Das Kopfteil 5 bildet dabei die obere Abdeckplatte des Gehäuses 2. Dieses Haubenscharnier 4 besitzt typischerweise ein Scharnier-Oberteil 4 a, das mit der Fronthaube verbunden ist (nicht dargestellt), und ein Scharnier-Unterteil 4 b, das über zwei Schraub-Verbindungen 4 c an dem insoweit auch als Scharnierträger fungierenden Kopfteil 5 des Hubelementes 3 befestigt ist.

An dem Scharnier-Oberteil bzw. dem Scharnier-Unterteil sind weiterhin typischerweise Gelenkarme 4 d drehbeweglich angelenkt.

In den zeichnungsmäßig dargestellten beiden Ausführungsformen der Erfindung ist ein scherenförmiges Hubelement in Verbindung mit einem Spiralfeder-Antrieb gezeigt. Ein derartiges nach dem Scherenprinzip aufstellbares Hubelement ist durch die eingangs zitierte DE 103 11 53 B3 bekannt geworden. Aber auch andere Konstruktionen für das Hubelement sind denkbar.

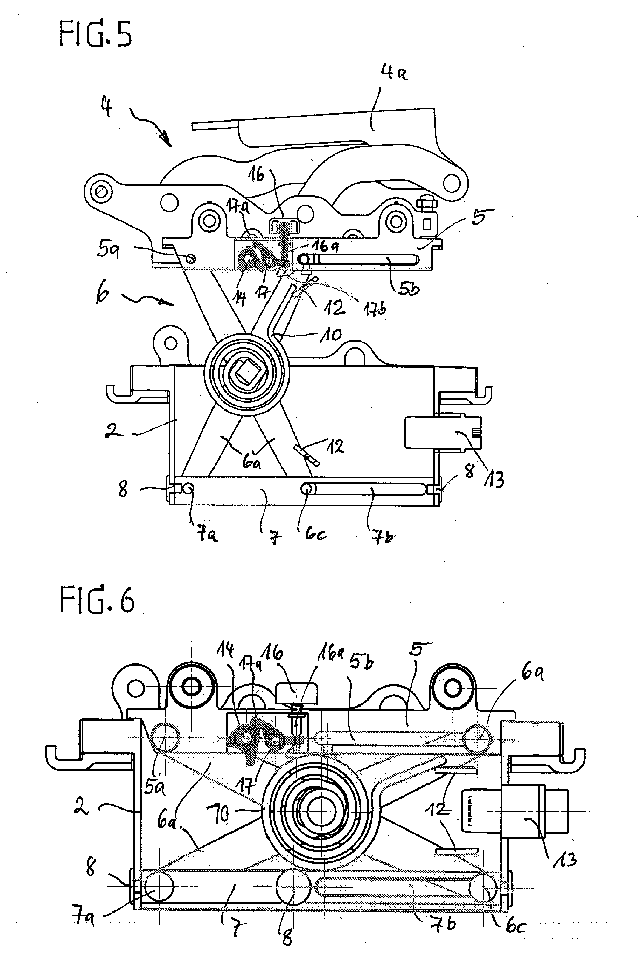

Wie insbesondere die Figuren 2 und 4 zeigen, ist bei den Ausführungsformen nach der Erfindung ein Scherensystem mit nur einer Schere 6 vorgesehen, mit zwei gekreuzten Schenkeln 6 a, die im Kreuzungspunkt 6 b drehbeweglich miteinander verbunden sind. Im Gehäuse 2 ist bodenseitig ein unteres Lagerteil 7 für die einen (unteren) Enden der Scheren-Hebel 6 a mittels Befestigungs-Schrauben 8 lösbar angebracht. Am Lagerteil 7 ist einmal eine feste Drehachse 7 a für das Ende eines Scherenhebels 6 a sowie zum anderen eine langlochartige lineare Laufkulisse 7 b für das, einen Kulissenstein 6 c aufweisenden Ende des anderen Scherenhebels 6 a ausgebildet.
In entsprechender Weise ist am Kopfteil 5 eine feste Drehachse 5 a und eine langlochartige lineare Laufkulisse 5 b für die anderen (oberen) Enden der Scherenhebel 6 a ausgebildet.

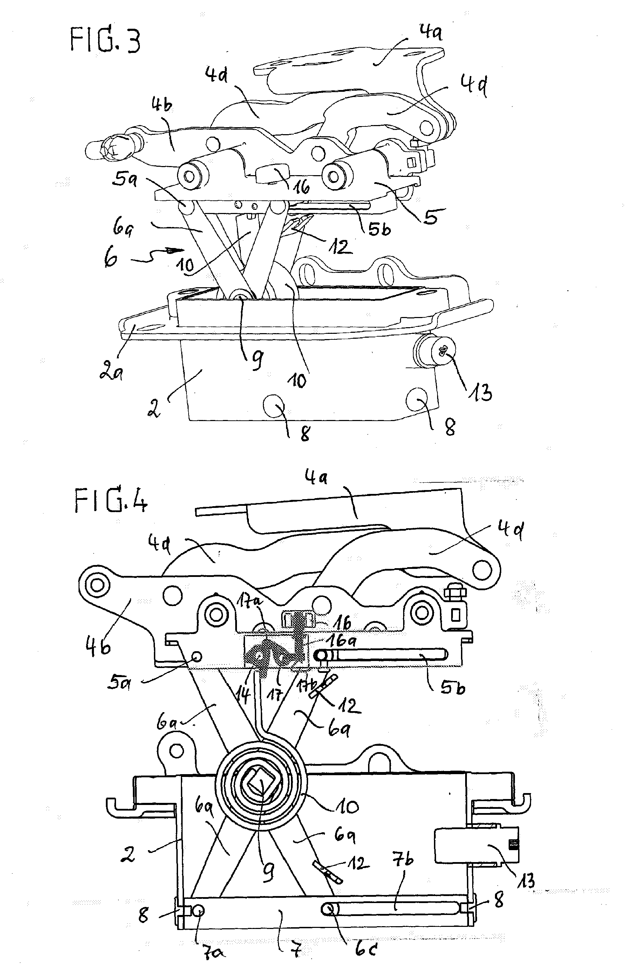

Wie insbesondere die Fig. 3 erkennen lässt, ist zu beiden Seiten des unteren Lagerteiles 7 und des Kopfteiles 5 jeweils eine Schere mit jeweils zwei Scheren-Schenkeln 6 a vorgesehen, die in ihren Kreuzungspunkten auf einer gemeinsamen Achse 9 gelagert sind, die auch als Lagerstelle für das eine Ende einer Spiralfeder 10, welche den Antrieb für das Aufstellen der Schere und damit des Hubelementes samt Fronthaube bildet, ausgebildet ist.

Die gemeinsame Achse 9 besitzt typischerweise einen Vierkantabschnitt, um den das eine Ende der Spiralfeder umgebördelt ist, und auf der auch die inneren Scheren-Schenkel für eine verdrehfeste Lagerung aufgenommen sind. Die äußeren Scheren-Schenkel sind auf der gemeinsamen Achse 9, unter Verwendung einer Distanzscheibe zu den inneren Schenkeln und einer Sicherungsscheibe drehbar gelagert.

Das andere, freie Ende der Spiralfeder liegt am Kopfteil 5 des Scherensystems, d.h. des Hubelementes, an, wobei im niedergehaltenen Grundzustand die Spiralfeder 10 vorgespannt ist. Zum Niederhalten des Scherensystems gegen die Vorspannkraft der Spiralfeder 10 ist eine lösbare Haltevorrichtung vorgesehen, die im dargestellten Ausführungsbeispiel durch einen Haltestift 11 mit z.B. eingekerbter SollBruchstelle in Verbindung mit zwei Halterungen 12 an gegenüberliegenden Schenkelpaaren gebildet ist. Dieser Haltestift 11 hält die beiden Scheren gegen die Kraft der vorgespannten Spiralfeder 10 im "zusammengefalteten" Grundzustand nach Fig. 2.

Solche Haltevorrichtungen sind in vielfältigen Ausführungsformen bekannt geworden. Stellvertretend wird auf die EP 1 488 965 A1 verwiesen.

Zum Lösen der Haltevorrichtung ist ein pyrotechnischer Aktuator 13 vorgesehen, der bei einer sensorgesteuerten Auslösung mit einem entsprechenden, ausgestoßenen Stift den Haltestift 11 an der Sollbruchstelle auftrennt und damit die Aufstellung des Scherensystems freigibt. Der einfachen Wartung halber ist der pyrotechnische Aktuator 13 von außen zugänglich am Gehäuse 2 des Aufstellelementes auswechselbar befestigt.

Wird der Aktuator 13 in der Grundstellung nach den Figuren 1 und 2 aktiviert, sei es sensorgesteuert im Fall einer drohenden Kollision oder zu Inspektionszwecken, wird der Haltestift 11 zerstört. Dadurch ist das Hebelsystem entriegelt und dessen Kopfteil 5 wird durch die sich drehende Spiralfeder 10 aufgestellt. Dieser Zustand ist in den Fig. 3 und 4 dargestellt, wobei - der besseren Übersicht halber- nur die wesentlichen Bezugszeichen eingetragen sind.

Das freie Ende der Spiralfeder findet dabei seine BewegungsBegrenzung an einem Anschlag, die durch eine Sperrklinke 14 eines Federausschalt-Mechanismus 15, dessen Aufbau und Funktion später noch erläutert werden wird, gebildet ist. Die Schere hat sich bei dem Aufstellvorgang um ihre festen Drehachsen 5 a, 7 a gedreht und zusätzlich die lineare Bewegung in den Kulissen 5 b, 7 b vollzogen.

Die Spiralfeder 10 steht auch im aufgestellten Zustand des Hubelement weiter unter Vorspannung, um die bei einem Personenaufprall auftretenden Kräfte abfedern zu können und um das Eigengewicht der Fronthaube zu halten. Die notwendige Spiralfederkaft setzt sich daher aus diesen beiden Kraftkomponenten zusammen. Als Ergebnis dieser Aufstellbewegung ist daher die Fronthaube im windschutzseitigen Bereich um einen vorgegebenen Hub, z.B. 55 mm, stoßabsorbierend aufgestellt.

Um das für das Reversieren des Hubelementes notwendige Absenken zu erleichtern, ist ein Federausschalt-Mechanismus 15 vorgesehen, bestehend bei der ersten Ausführungsform der Erfindung aus einer niederdrückbaren Taste, d.h. einem Ausschaltknopf 16, der im Kopfteil 5 federvorgespannt gelagert ist, und einen nach unten ragenden Stift 16 a aufweist, der in Wirkverbindung mit einem Anschlag an einer Halteklinke 17 steht, die wiederum, federunterstützt durch eine Bügelfeder 17 b, mit einer vorderen Nase 17 a im sperrenden Wirkeingriff mit der bereits erwähnten Sperrklinke 14, an welcher das freie Ende der Spiralfeder 10 anliegt, steht. Beide Drehklinken 14, 17 sind im Kopfteil 5 drehbar gelagert.

Um die aufgestellte Fronthaube abzusenken, wird der druckfederunterstützte Ausschaltknopf 16 manuell gedrückt. Dabei verschwenkt der Stift 16 a die Halteklinke 17 gegen die Bügelfeder 17 b im Uhrzeigersinn, wodurch die vordere Haltenase 17 a die Verklinkung mit der Sperrklinke 14 freigibt, so dass das freie Ende der Spiralfeder 10 aufgrund der Vorspannung die Sperrklinke 14 gegen den Uhrzeigersinn verschwenken kann. Dadurch kommt das freie Ende der Spiralfeder 10 frei und legt sich an der oberen an den Scherenschenkeln 6 a angebrachten Halterung 12 an.
Dieser Zustand unmittelbar vor dem Absenken ist in der Fig. 5 dargestellt.

Da der Federantrieb ausgeschaltet ist, sind die Scheren 6 frei beweglich und werden durch das Eigengewicht der Fronthaube "zusammengefaltet", d.h. das System fällt selbsttätig, wie in Fig. 6 dargestellt, in sich zusammen.

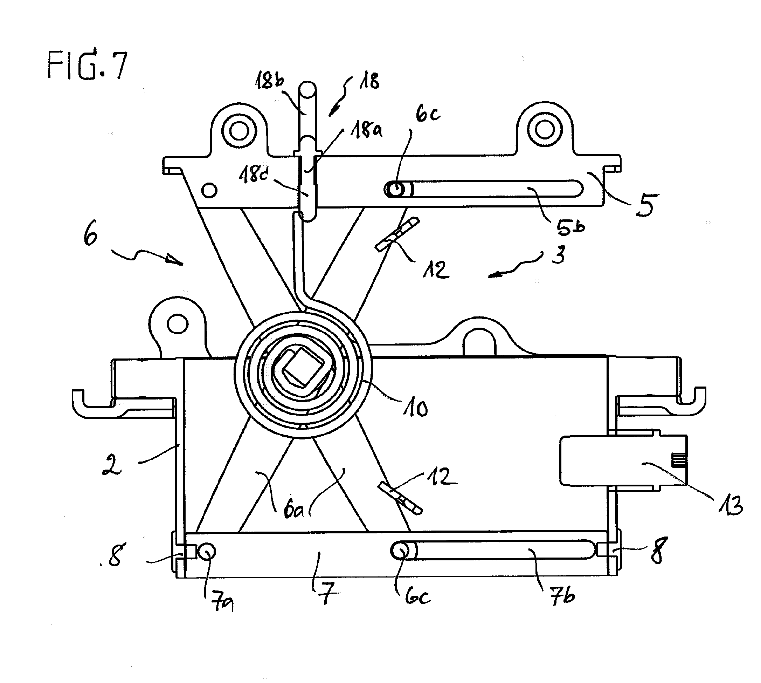

Bei einer zweiten Ausführungsform der Erfindung, die in der Fig. 7 dargestellt ist, ist anstelle eines Taste-Drehklinken-Systems ein Gewindesperrbolzen 18 als Federausschalt-Mechanismus 15 vorgesehen.

Dieser Gewindesperrbolzen 18 besitzt einen Gewindeabschnitt 18 a, mit dem er in einem Gegengewinde im Kopfteil 5 axial verschiebbar aufgenommen ist, zudem einen Sperrabschnitt 18 c für die Anlage des freien Endes der Spiralfeder 10 im aufgestellten Zustand des Scheren-Hubelementes 3, sowie ein Betätigungsglied 18 b, das z.B. ösenförmig ausgebildet sein kann, zum manuellen Verdrehen des Gewindesperrbolzens 18.

Wird dieser um einen bestimmten Betrag nach oben herausgedreht, kommt die Spiralfeder frei und das Scherensystem fällt, wie bereits im Zusammenhang mit der ersten Ausführungsform beschrieben, aufgrund des Eigengewichtes der Fronthaube in sich zusammen, entsprechend dem Zustand gemäß Fig. 6.

Im abgelegten Zustand der Fronthaube können dann die Befestigungsschrauben 8 und die Verbindung zum Scharnier bzw. zur Fronthaube gelöst und die Aufstelleinheit, d.h. das Scherensystem, kann entnommen werden. Der jeweilige Federausschalt-Mechanismus 15, d.h. entweder die Kombination Taste 16 - Halteklinke 17 und Sperrklinke 14 oder der Gewindesperrbolzen 18 sowie die Spiralfeder 10 können wieder in die Ausgangsstellung gebracht werden, unter Einsetzen eines neuen pyrotechnischen Aktuators 13 und Haltestiftes 11. Danach wird die gesamte Aufstelleinheit wieder montiert und das Aufstellelement ist wieder einsatzbereit. Dieses Zurücksetzen in den gespannten Zustand ist Sache einer Werkstatt.

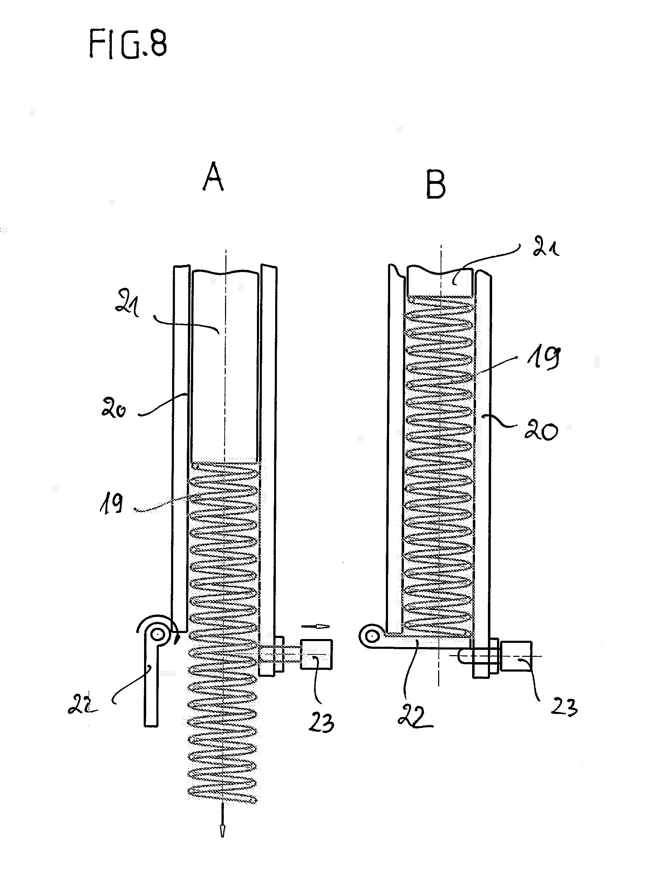

Wie in Fig. 8 symbolisch dargestellt, kann der Federausschalt-Mechanismus auch bei Schutzvorrichtungen mit einer linear aufstellenden Druckfeder 19 eingesetzt werden.
Die Druckfeder 19 ist in einem Rohr 20 aufgenommen und stützt sich am oberen Ende an dem aufzustellenden Körper 21, z.B. einem Scharnierträger oder einem Schenkelrohr, und am unteren Ende an einem drehbar angelenkten Verschlußdeckel 22 ab, der im Grundzustand und während der Aufstellung mittels einer Verschlußschraube 23 festgestellt ist (Figurenteil B) und zum Zwecke des Absenkens durch Herausdrehen der Verschlußschraube entriegelt wird (Figurenteil A).

Die Erfindung umfasst einen ausschaltbaren Federantrieb einer aufstellbaren Schutzkomponente, um dessen Rückstellen zu erleichtern. Als Antriebsfeder sind beispielsweise eine Spiralfeder und eine Druckfeder, aber auch andere Federtypen, wie Schenkel- oder Spreizfedern, denkbar.

Dieses Rückstellen mit ausgeschalteter Federkraft ist ohne Spannen des Federantriebes nicht auf ein Aufstellelement für eine aktive Motorhaube beschränkt, sondern ist generell bei allen Schutzvorrichtungen mit Federantrieben, bei denen zum Rückstellen die Federkraft ausgeschaltet werden soll, also auch z.B. im Bereich der Überrollschutzsysteme oder des Unterfahrschutzes, bei dem frontseitig im Fall eines drohenden Auffahrunfalles eine Frontklappe ausgefahren wird, anwendbar.

Auch sind die dargestellten Konstruktionen nur als, wenn auch sehr vorteilhafte, Ausführungsformen zu betrachten. So können prinzipiell auch andere mechanische Federausschalt-Mechanismen 15 eingesetzt werden, die auf bekannten Anschlag- und Verriegelungsprinzipien beruhen, die entweder direkt manuell oder über eine Steuerleitung betätigbar sind. Aber auch nicht mechanisch wirkende Einrichtungen können zum Ausschalten des Federantriebes eingesetzt werden.

### Bezugszeichenliste

- 1: Aufstellelement
- 2: Gehäuse
- 2 a: rahmenartiger Flansch
- 3: Hubelement
- 4: Haubenscharnier
- 4 a: Scharnier-Oberteil
- 4 b: Scharnier-Unterteil
- 4 c: drehgelenkige Verbindungen
- 4 d: Gelenkarme
- 5: Kopfteil (Hubelement)
- 5 a: feste Drehachse
- 5 b: lineare Laufkulisse
- 6: Schere
- 6 a: Schenkel (der Schere)
- 6 b: Kreuzungspunkt (der Scheren-Schenkel)
- 6 c: Kulissenstein
- 7: unteres Lagerteil
- 7 a: feste Drehachse
- 7 b: lineare Laufkulisse
- 8: Befestigungsschrauben
- 9: gemeinsame Achse
- 10: Spiralfeder
- 11: Haltestift
- 12: Halterungen (für den Haltestift)
- 13: pyrotechnischer Aktuator
- 14: Sperrklinke
- 15: Federausschalt-Mechanismus
- 16: Ausschaltknopf
- 16 a: Stift (am Ausschaltknopf)
- 17: Halteklinke
- 17 a: vordere Nase
- 17 b: Bügelfeder
- 18: Gewindesperrbolzen
- 18 a: Gewindeabschnitt
- 18 b: Betätigungsglied
- 18 c: Sperrabschnitt
- 19: Druckfeder
- 20: Rohr
- 21: aufzustellender Körper
- 22: Verschlußdeckel
- 23: Verschlußschraube

## Patentansprüche

1. Schutzvorrichtung in Kraftfahrzeugen zum Personenschutz, welche ein in einem karosseriefesten Gehäuse (2) geführtes aufstellbares Element (3, 21) aufweist, das im Grundzustand durch eine auslösbare Haltevorrichtung (11, 12) in seiner Lage fixiert ist und im Gefahrenfall sensorgesteuert mittels eines vorgespannten Federantriebes (10, 19) mit hoher Beschleunigung um einen vorgegebenen Hub unter Aktivierung des Schutzes ausfahrbar ist, **dadurch gekennzeichnet, dass** eine Einrichtung (15) zum Ausschalten des Federantriebes (10, 19) zur selbsttätigen Absenkung des ausgefahrenen aufstellbaren Elementes (3, 21) ohne Spannen des Federantriebes (10,19) vorgesehen ist.

2. Schutzvorrichtung nach Anspruch 1, **dadurch gekennzeichnet, dass** die Einrichtung zum Ausschalten des Federantriebes als manuell aktivierbare mechanische Einrichtung ausgebildet ist.

3. Schutzvorrichtung nach Anspruch 1 oder 2, **dadurch gekennzeichnet, dass** der Federantrieb durch eine Spiralfeder (10) gebildet ist.

4. Schutzvorrichtung nach Anspruch 2 oder 3, **dadurch gekennzeichnet, dass** die mechanische Einrichtung (15) zum Ausschalten des Federantriebes (10) einen manuell betätigbaren Ausschaltknopf (16, 16 a) in Verbindung mit einer Klinkenanordnung (14, 17), die mit dem Federantrieb (10) in lösbarer Wirkverbindung steht, aufweist.

5. Schutzvorrichtung nach Anspruch 4, **dadurch gekennzeichnet, dass** die Klinkenanordnung zwei Drehklinken aufweist, mit einer Sperrklinke (14) für einen lösbaren Wirkeingriff mit dem Federantrieb (10) und mit einer Halteklinke (17) für einen sperrenden Wirkeingriff mit der Sperrklinke (14), die durch eine Feder (17 b) in Sperrichtung vorgespannt ist und die einen Anschlag für eine Wirkverbindung mit dem Ausschaltknopf (16, 16 a) besitzt.

6. Schutzvorrichtung nach Anspruch 2 oder 3, **dadurch gekennzeichnet, dass** die mechanische Einrichtung (15) zum Ausschalten des Federantriebes (10) als manuell verdrehbarer Gewindesperrbolzen (18) ausgebildet ist.

7. Schutzvorrichtung nach Anspruch 6, **dadurch gekennzeichnet, dass** der Gewinde-Sperrbolzen (18) ein Betätigungsglied (18 c) für eine manuelle Verdrehung, einen Gewindeabschnitt (18 a) für eine axiale Bewegung des Gewindesperrbolzens (18) und einen Sperrabschnitt (18 c) für einen lösbaren Wirkeingriff mit dem Federantrieb (10) aufweist.

8. Schutzvorrichtung nach einem der Ansprüche 1 bis 7, **dadurch gekennzeichnet, dass** das aufstellbare Element (3) durch ein Scherensystem (6) gebildet ist.

9. Schutzvorrichtung nach Anspruch 8, **dadurch gekennzeichnet, dass** das Scherensystem (6) ein bewegliches Kopfteil (5) und ein karosseriefestes unteres Lagerteil (7) sowie mindestens zwei gekreuzte Schenkel (6 a) aufweist, wobei die einen Schenkelenden am Kopfteil (5) und die anderen Schenkelenden am unteren Lagerteil (7) derart angebracht sind, dass jeweils ein Schenkelende eine feste Drehachse (5 a, 7 a) aufweist, und das andere Ende mit einem Kulissenstein (6 c) linear verschiebbar in einer Langlochkulisse (5 b, 7 b) aufgenommen ist.

10. Schutzvorrichtung nach Anspruch 9, **dadurch gekennzeichnet, dass** zum lösbaren Niederhalten des Scherensystems (6) gegen die Vorspannkraft des Federantriebes (10) ein Haltestift (11) vorgesehen ist, der eine Sollbruchstelle aufweist und zwischen zwei gegenüberliegenden Scheren-Schenkeln (6 a) eingespannt ist, und dem auf Höhe der Sollbruchstelle ein pyrotechnischer Aktuator (13) zugeordnet ist.

11. Schutzvorrichtung nach Anspruch 1 oder 2, mit einem Federantrieb in Form einer Druckfeder (19) für ein linear ausfahrbares Element (21), welches in einem Rohr (20) aufgenommen, das an einem Ende mit einem lösbaren Drehklappenverschluß (22, 23) versehen ist.
